# EUROPEAN PATENT SPECIFICATION

(11) **EP 3 312 658 B1**
(45) Date of publication and mention of the grant of the patent: **24.07.2019**
(21) Application number: 16811268.8
(22) Date of filing: 07.03.2016
(51) Int. Cl.: G02B 27/01, B60K 35/00

(54) **VIRTUAL IMAGE PRESENTATION SYSTEM AND VIRTUAL IMAGE PRESENTATION METHOD**
SYSTEM FÜR VIRTUELLE BILDDARSTELLUNG UND VERFAHREN ZUR VIRTUELLEN BILDDARSTELLUNG
SYSTÈME ET PROCÉDÉ DE PRÉSENTATION D'IMAGE VIRTUELLE

(30) Priority: 16.06.2015 JP 2015121125
(43) Date of publication of application: 25.04.2018
(73) Proprietor: JVC KENWOOD Corporation, Kanagawa 221-0022 (JP)
(72) Inventor: FUKUMOTO, Akihiro, Yokohama-shi Kanagawa 221-0022 (JP)
(74) Representative: Emde, Eric
(86) International application number: PCT/JP2016/056942
(87) International publication number: WO 2016/203793

(56) References cited:
- EP-A1- 2 793 193
- WO-A1-2014/174575
- WO-A1-2015/060193
- DE-A1-102008 046 038
- JP-A- 2010 070 117
- JP-A- 2010 256 878
- JP-A- 2011 123 126
- JP-A- 2015 080 988

## Description

### [TECHNICAL FIELD]

The present invention relates to virtual image presentation technologies and, more particularly, to virtual image presentation systems, image projection devices, and virtual image presentation methods for presenting an image based on an image display light to a user as a virtual image.

### [BACKGROUND ART]

Recently, head up displays are available for use as display devices for vehicles. A head up display projects an image display light toward, for example, a windshield of a vehicle and superimposes and displays a virtual image based on the image display light on the scenery outside the vehicle. The line of sight of a driver driving, for example, a highway and that of a driver driving in an urban district may differ in the vertical direction. Therefore, the visibility of a virtual image can be enhanced by switching the height of the display position of the virtual image depending on the type of road traveled (see, for example, JP 2009-113710 A).

### [PROBLEM TO BE SOLVED BY THE INVENTION]

When a driver is driving a vehicle at a constant speed, for example, the driver often fixes the line of sight to a distance along the center of the traffic lane that the vehicle is traveling. When the position of the traveling vehicle moves left or right relative to the traffic lane, those objects in the scenery outside the vehicle that are close to the vehicle and visible on the front side appear to move heavily to the left or to the right. The head-up display device is fixed to the vehicle. Therefore, the display position of a virtual image displayed while the vehicle is traveling is fixed relative to the vehicle. Consequently, the virtual image will be superimposed at a fixed position relative to the scenery that appears to move to the left or to the right due to the movement of the vehicle with the result that the virtual image may look unnatural.

The present invention addresses the issue and a purpose thereof is to provide a technology capable of enhancing the visibility of a virtual image superimposed and displayed on the scenery outside the vehicle.

Attention is drawn to WO 2014/174575 A, which shows a head-up display apparatus for a vehicle which is configured to output a display that has a convex shape in an upward direction as a whole such that a width of the display in a left/right direction, when the display is viewed from a predetermined view point, indicates a width of the vehicle. The image includes a meter that indicates an amount of a predetermined parameter.

### [MEANS TO SOLVE THE PROBLEM]

In accordance with the present invention, a virtual image presentation system and a virtual image presentation method as set forth in the appended claims is provided. Further embodiments are inter alia disclosed in the dependent claims. In particular, to address the aforementioned issue, a virtual image presentation system according to the present invention comprises: a projection unit that projects an image display light toward a virtual image presentation plane defined in a vehicle and presents a virtual image to a driver; an acquisition unit that acquires information for identifying a position of an object outside the vehicle; an identification unit that generates information for identifying relative positions of the object and the vehicle, based on the information acquired by the acquisition unit; and a virtual image position adjustment unit that adjusts a position to present the virtual image as viewed from the driver, based on the information generated by the identification unit.

Furthermore, according to the invention, the acquisition unit includes an imaging device that is adapted to capture an image of a scene in front of the vehicle, including both the virtual image presented on the virtual image presentation plane and a lane line that extends along a traffic lane that the vehicle travels, the image captured by the imaging device including both the virtual image presented on the virtual image presentation plane and the lane line, the identification unit generates the information for identifying relative positions of the virtual image and the lane line from the image captured by the imaging device, and the virtual image position adjustment unit adjusts the position to present the virtual image, based on the information generated by the identification unit and identifying the relative positions of the virtual image and the lane line.

A method of presenting a virtual image according to this invention is defined in claim 4.

### [ADVANTAGE OF THE INVENTION]

According to the invention, the visibility of a virtual image superimposed and displayed on the scenery outside the vehicle is enhanced.

### [BRIEF DESCRIPTION OF THE DRAWINGS]

Fig. 1 schematically shows how a virtual image presented by the virtual image presentation system according to the embodiment looks;
Fig. 2 schematically shows how a virtual image presented by a virtual image presentation system according to a comparative example looks;
Fig. 3 shows the structure of the virtual image presentation system according to an illustrative example;
Fig. 4 is a top view schematically showing the internal structure of the image projection device;
Fig. 5 schematically shows an exemplary operation of the projection mirror driver;
Fig. 6 is a block diagram showing the functions and structure of the virtual image presentation system;
Figs. 7A and 7B schematically show a method of identifying a vehicle position from an image of a scene in front of the vehicle;
Figs. 8A and 8B schematically show an exemplary operation of the image display element;
Fig. 9 schematically shows how the virtual image looks with the position of presentation being adjusted by the virtual image presentation system;
Fig. 10 is a flowchart showing the flow of operation of the virtual image presentation system;
Fig. 11 schematically shows the structure of the virtual image presentation system according to the invention;
Fig. 12 schematically shows an image captured by the on-vehicle camera according to the invention; and
Figs. 13A and 13B schematically show how the position to present the virtual image is adjusted.

### [MODE FOR CARRYING OUT THE INVENTION]

A detailed description will now be given of the embodiments of the present invention with reference to the attached drawings. Like numerals represent like elements so that the description will be omitted accordingly. The structure described below is by way of example only and does not limit the scope of the invention.

A brief summary will be given before describing the invention in specific details. An embodiment of the present invention relates to a virtual image presentation system. A virtual image presentation system projects an image display light toward a virtual image presentation plane provided in a vehicle so as to present the virtual image to the driver. The virtual image presentation system includes an acquisition unit that acquires information for identifying the position of an object outside the vehicle, an identification unit that generates information for identifying the relative positions of the object and the vehicle based on the information acquired by the acquisition unit, and a virtual image position adjustment unit that adjusts the position to present the virtual image for the driver to see, based on the information generated by the identification unit.

For example, the object outside the vehicle is a lane line for marking a driving lane (the traffic lane that the vehicle is traveling on) on a road and is exemplified by a white line formed of a solid line and a broken line. In this embodiment, the system keeps track of whether the vehicle is traveling near the center of the driving lane, or traveling on the right or left in the driving lane, by identifying the relative positions of the vehicle and the lane line. The system further adjusts the position to present a virtual image in accordance with the position of the traveling vehicle. For example, when the vehicle is traveling on the right on the driving lane, the system shifts the position to present the virtual image to the left. This allows the position to present a virtual image to be located near the center of the driving lane and enhances the visibility of the virtual image.

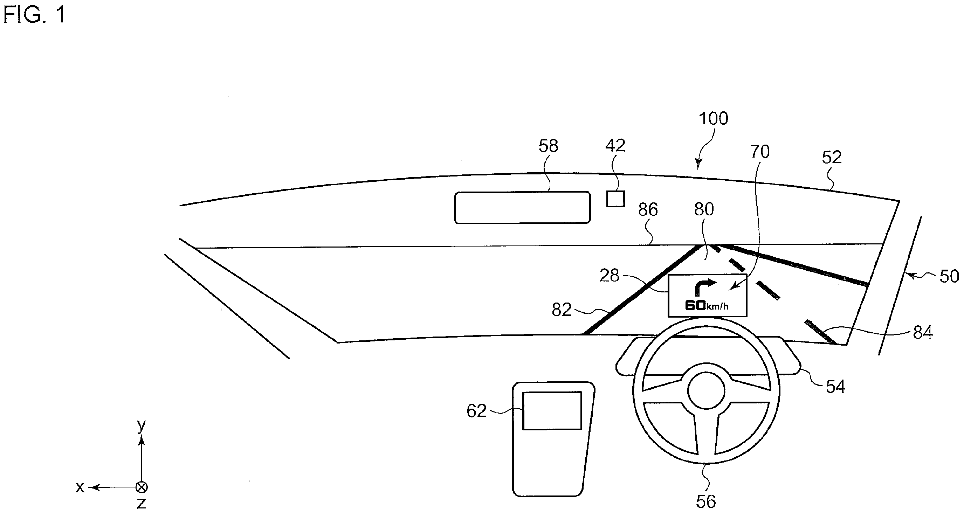

Fig. 1 schematically shows how a virtual image 70 presented by the virtual image presentation system 100 according to the embodiment looks. The virtual image presentation system 100 projects an image display light toward a combiner 28, i.e., a virtual image presentation plane, mounted on a vehicle 50. The virtual image presentation system 100 presents the virtual image 70 to the driver via the combiner 28. For example, the combiner 28 is provided at a position directly in front of the driver. More specifically, the combiner 28 is positioned on a straight line connecting an instrument panel 54 or a steering wheel 56 of the vehicle 50 to the driver. The combiner 28 is configured to transmit light from outside the vehicle. The driver can see the scenery outside the vehicle and the virtual image 70 at the same time via the combiner 28.

The virtual image 70 presented to the driver is exemplified by an image indicating, for example, a traveling speed of the vehicle shown on the instrument panel 54, or an image for showing information related to route guidance to the destination by a navigation device 62. Such an image is presented as if it is located 1.7 m∼2.0 m ahead of the vehicle. The driver views a virtual image superimposed on the scenery outside the vehicle.

In the description in this specification, a rectangular coordinate system defined by an x axis, y axis, and z axis as shown in Fig. 1 is used. The x axis extends in the width direction of the vehicle, the y axis extends in the height direction of the vehicle, and the z axis extends in the length direction of the vehicle. The positive directions of the x axis, y axis, and z axis are defined as directions of the arrows in Fig. 1. The negative directions are defined as being opposite to the directions of the arrows.

In addition to the rectangular coordinate system, the terms "forward/backward", "leftward/rightward", "upward/downward" may be used to denote directions. The terms "forward/backward" indicate an anterior direction and a posterior direction relative to the vehicle 50, i.e., the directions of travel of the vehicle. In other words, "forward" corresponds to the positive direction in the z axis and "backward" corresponds to the negative direction in the z axis. The terms "leftward/rightward" indicate a direction toward the left side and toward the right side of the vehicle 50. In other words, "leftward" corresponds to the positive direction in the x axis and "rightward" corresponds to the negative direction in the x axis. The terms "upward/downward" indicate directions perpendicular to the surface of the road that the vehicle 50 travels, and, more specifically, a direction toward the vehicle and a direction away from the vehicle with respect to the road surface. In other words, "upward" corresponds to the positive direction in the y axis and "downward" corresponds to the negative direction in the y axis.

Fig. 1 shows the vehicle 50 traveling near the center of a driving lane 80 that extends straight. The driving lane 80 extending toward a horizontal line 86 is seen through a windshield 52. A left lane line 82 and a right lane line 84 each extends toward the horizontal line 86 along the driving lane 80. The vehicle 50 is traveling near the center between the left lane line 82 and the right lane line 84. When driving the vehicle 50 on a road like this at a constant speed, the driver often fixes the line of sight to a distance along the center of the driving lane 80. When the driver fixes the line of sight to a distance along the center, it appears to the driver the virtual image 70 is right in the middle of the left lane line 82 and the right lane line 84.

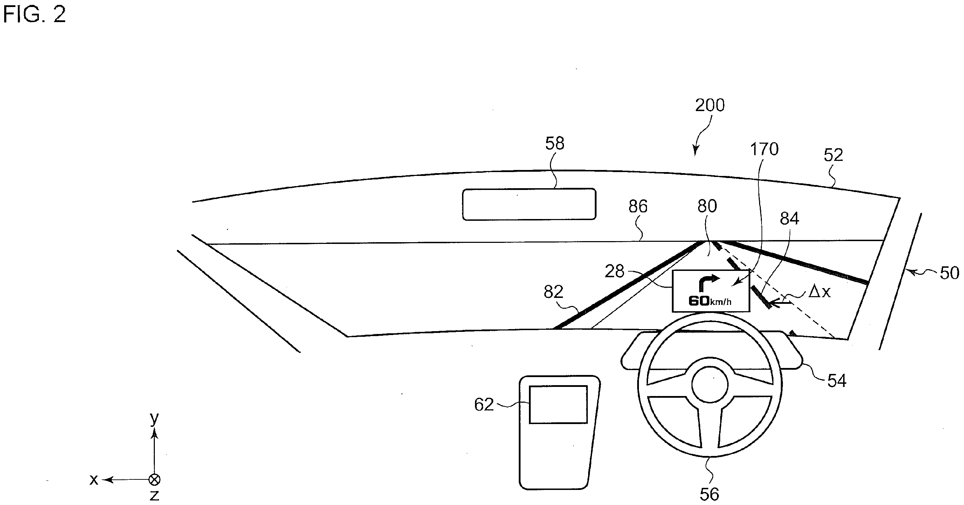

Fig. 2 schematically shows how a virtual image 170 presented by a virtual image presentation system 200 according to a comparative example looks. Unlike the system of the embodiment, the virtual image presentation system 200 presents the virtual image 170 at a position fixed relative to the vehicle 50 regardless of the position of the traveling vehicle 50. The virtual image presentation system 200 is configured to present the virtual image 170, fixing it at the same position as the virtual image 70 shown in Fig. 1. The virtual image presentation system 200 presents the virtual image 170 at a position 1.7 m∼2.0 m ahead of the vehicle.

Fig. 2 shows the vehicle 50 traveling on the right side of the driving lane 80. Since the position of the traveling vehicle 50 is shifted to the right side, the right lane line 84 looks shifted from the right lane line of Fig. 1 (indicated by a broken line in Fig. 2) by Δx. Similarly, the left lane line 82 also looks shifted to the left of the left lane line of Fig. 1 (indicated by a thin solid line in Fig. 2). Thus, the scenery outside the vehicle looks shifted leftward or rightward as the position of the traveling vehicle 50 moves leftward or rightward relative to the driving lane 80. Further, those objects in the scenery outside the vehicle that are close to the vehicle and visible on the front side appear to be shifted heavily to the left or to the right. It can therefore be said that left and right positional shifts at a position about 2 m in front of the vehicle where the virtual image 170 is presented is large enough to be meaningfully recognized by the driver.

Meanwhile, the virtual image 170 is fixed relative to the vehicle 50. Therefore, the position of the virtual image 170 as seen from the driver is not shifted to the left or right. As a result, it looks to the driver that the scenery outside the vehicle at the position about 2 m in front of the vehicle where the virtual image 170 is presented is shifted to the left or right, but the virtual image 170 is not shifted to the left or right. To look it from the opposite side, only the position of the virtual image 170 is shifted to the left or right relative to the scenery outside the vehicle, giving it an appearance that the position to present the virtual image 170 is shifted to the right in the driving lane 80. Thus, the virtual image 170 may look unnatural by fixing the position to present the virtual image 170.

In this background, the embodiment provides a natural view that shows the virtual image 70 blended in the scenery outside the vehicle by adjusting the position to present the virtual image 70 depending on the position of the traveling vehicle. A detailed description of the structure of the virtual image presentation system 100 according to the embodiment will be given below.

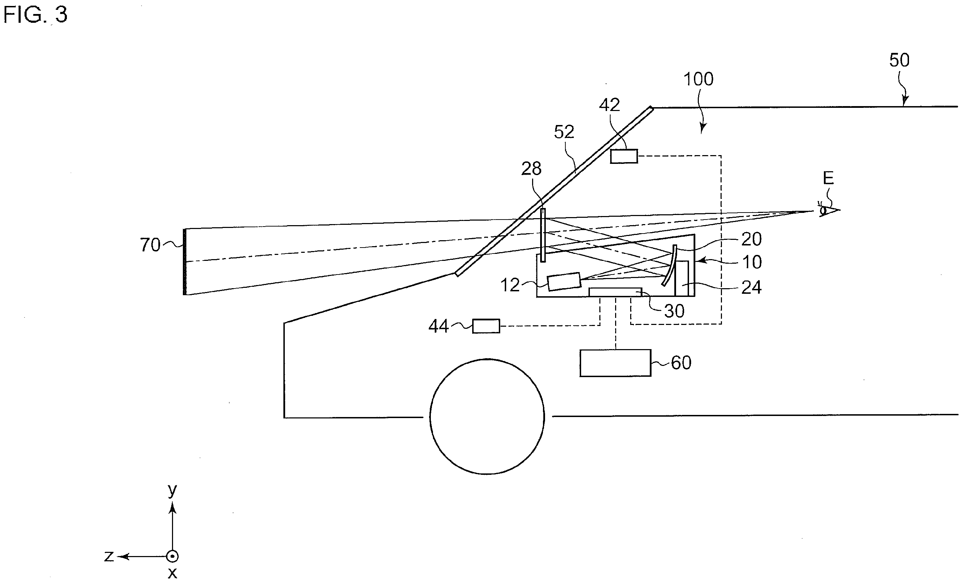

Fig. 3 shows the structure of the virtual image presentation system 100 according to an illustrative example. The virtual image presentation system 100 includes an image projection device 10, an on-vehicle camera 42, an on-vehicle sensor 44, and an external device 60.

The image projection device 10 is a so-called head up display device and presents the virtual image 70 to a driver E by projecting an image display light toward the combiner 28 representing a virtual image presentation plane. The driver E can see the virtual image 70 superimposed on the scenery outside the vehicle via the combiner 28 and the windshield 52. Therefore, the driver E can access information shown in the virtual image 70 substantially without moving the line of sight while driving the vehicle.

The image projection device 10 includes a projection unit 12, a projection mirror 20, a projection mirror driver 24, the combiner 28, and a control unit 30. The projection unit 12 generates an image display light to present the virtual image 70 and projects the generated image display light toward the projection mirror 20. The projection mirror 20 is a concave mirror and reflects the image display light from the projection unit 12 toward the combiner 28. The projection mirror driver 24 adjusts the reflection angle of the projection mirror 20 and adjusts the position to present the virtual image 70 accordingly. The control unit 30 controls the operation of the projection unit 12 and the projection mirror driver 24.

The on-vehicle camera 42 is an imaging device for capturing an image of the scenery in front of the vehicle. The on-vehicle camera 42 is located at a position in which it is possible to capture an image of an object outside the vehicle such as a lane line on the road. For example, the on-vehicle camera 42 is located in the neighborhood of a rear view mirror 58 as shown in Fig. 1. The on-vehicle camera 42 is connected directly or indirectly to the control unit 30 and transmits the data for the captured image to the control unit 30.

The on-vehicle sensor 44 is a device for identifying the position, orientation, etc. of the vehicle 50. The on-vehicle sensor 44 includes a vehicle speed sensor, a steering angle sensor, an acceleration sensor, an angular acceleration sensor, a GPS receiver, etc. The on-vehicle sensor 44 is connected directly or indirectly to the control unit 30 and transmits measurement data to the control unit 30.

The external device 60 is a device for generating original data for an image displayed as the virtual image 70. The external device 60 is exemplified by a navigation device and a mobile device such as a cellular phone, smart phone, and tablet. The external device 60 may be an Electronic Control Unit (ECU) for displaying information related to vehicle travel on the instrument panel 54. The external device 60 is connected to the control unit 30 and transmits image data or the like necessary to display the virtual image 70 to the control unit 30.

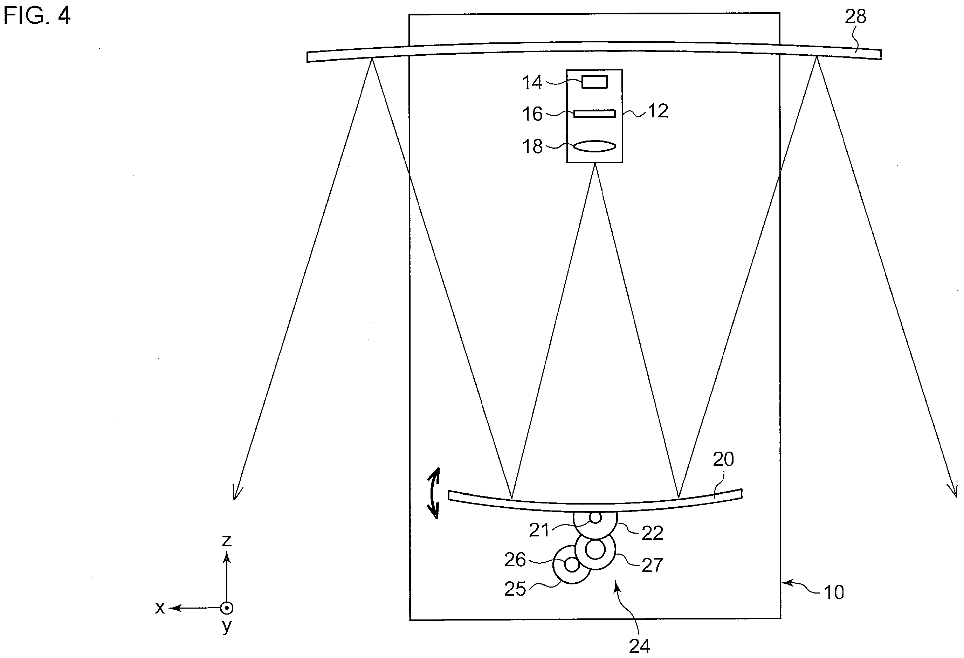

Fig. 4 is a top view schematically showing the internal structure of the image projection device 10.

The projection unit 12 includes a light source 14, an image display element 16, and a projection lens 18. The projection unit 12 may include various optical elements such as an optical lens, a filter, and a mirror (not shown). The projection unit 12 generates an image display light by illuminating the image display element 16 with the light from the light source 14. The projection unit 12 projects the generated image display light toward the projection mirror 20 via the projection lens 18.

The image display element 16 operates to receive the image data transmitted from the control unit 30 and generate the image display light corresponding to the image data. Liquid Crystal On Silicon (LCOS) (reflective liquid crystal display element) or Liquid Crystal Display (LCD) (transmissive liquid crystal display element) is used for the image display element 16. A self-luminous organic Electro Luminescence (EL) element may be used in place of the light source 14 and the image display element 16.

The projection mirror driver 24 includes a projection mirror driving shaft 21, a projection mirror gear 22, a motor 25, a motor gear 26, and an intermediate gear 27. The projection mirror driving shaft 21 is fitted to, for example, the rear surface of the projection mirror 20 and changes the orientation of the projection mirror 20 according to the rotation of the projection mirror driving shaft 21. The projection mirror driving shaft 21 is provided with the coaxial projection mirror gear 22. The rotation shaft of the motor 25 is provided with the motor gear 26. The rotational force of the motor 25 is transmitted to the projection mirror gear 22 via the intermediate gear 27.

The projection mirror driver 24 rotates the projection mirror driving shaft 21 as indicated by the arrows by driving the motor 25, thereby adjusting the reflection angle of the image display light projected to the projection mirror 20. The projection mirror driver 24 adjusts the position to present the virtual image 70 presented via the combiner 28 by adjusting the reflection angle of the image display light. In this embodiment, the projection mirror driver 24 is configured such that the position to present the virtual image 70 can be shifted leftward or rightward.

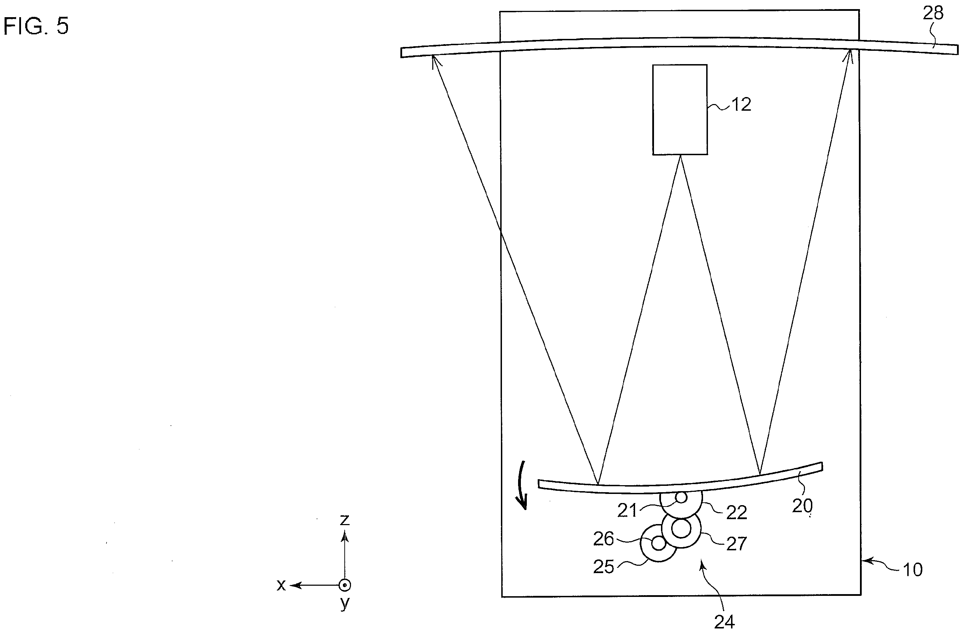

Fig. 5 schematically shows an exemplary operation of the projection mirror driver 24 and shows that the projection mirror 20 is rotated in the counterclockwise direction as indicated by the arrow. By changing the orientation of the projection mirror 20, the position to project the image display light reflected by the projection mirror 20 and projected to the combiner 28 is shifted leftward. In this way, the position to present the virtual image 70 presented via the combiner 28 can be shifted leftward.

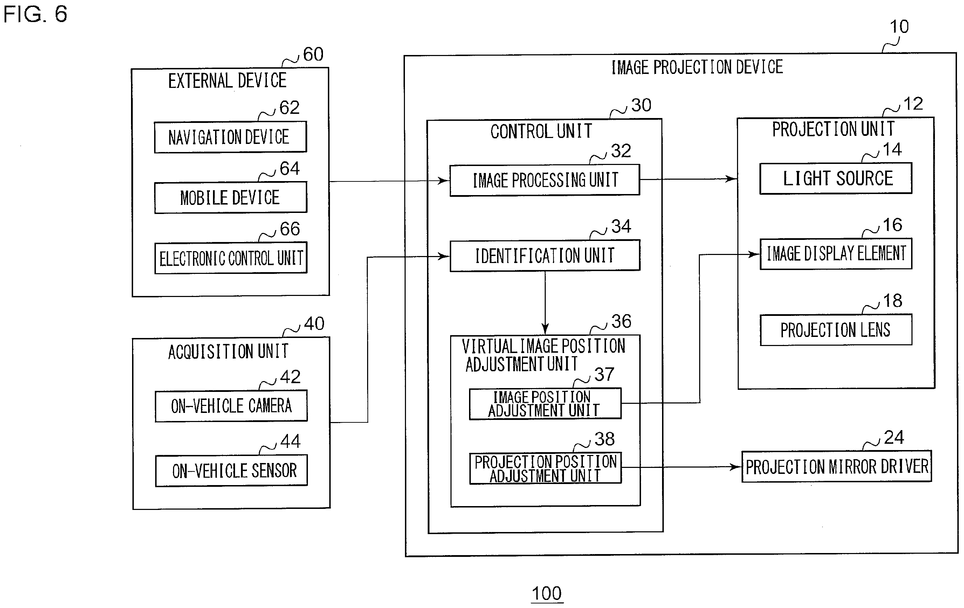

Fig. 6 is a block diagram showing the functions and structure of the virtual image presentation system 100. The virtual image presentation system 100 includes the image projection device 10, an acquisition unit 40, and the external device 60.

The blocks depicted in the block diagram of this specification are implemented in hardware such as devices like a CPU of a computer or mechanical units, and in software such as a computer program etc. Fig. 6 depicts functional blocks implemented by the cooperation of these elements. Therefore, it will be obvious to those skilled in the art that the functional blocks may be implemented in a variety of manners by a combination of hardware and software.

The acquisition unit 40 includes the on-vehicle camera 42, the on-vehicle sensor 44, etc. The acquisition unit 40 acquires information to identify the position of an object outside the vehicle 50 and transmits the information to the image projection device 10. The external device 60 includes the navigation device 62, a mobile device 64, an electronic control unit 66, etc. The external device 60 transmits image data used to display the virtual image 70 to the image projection device 10.

The control unit 30 includes an image processing unit 32, an identification unit 34, and a virtual image position adjustment unit 36. The image processing unit 32 uses the image data received from the external device 60 to generate an image signal for displaying the virtual image 70. The image processing unit 32 drives the projection unit 12 based on the generated image signal.

The identification unit 34 generates information for identifying the relative positions of the vehicle 50 and the object based on the information from the acquisition unit 40. The identification unit 34 identifies the position of a lane line (object) in an image in front of the vehicle captured by the on-vehicle camera 42 by means of image recognition. The identification unit 34 identifies the relative positions of the vehicle 50 and the lane lines by referring to the positions of the left lane line 82 and the right lane line located on the left and right of the driving lane 80.

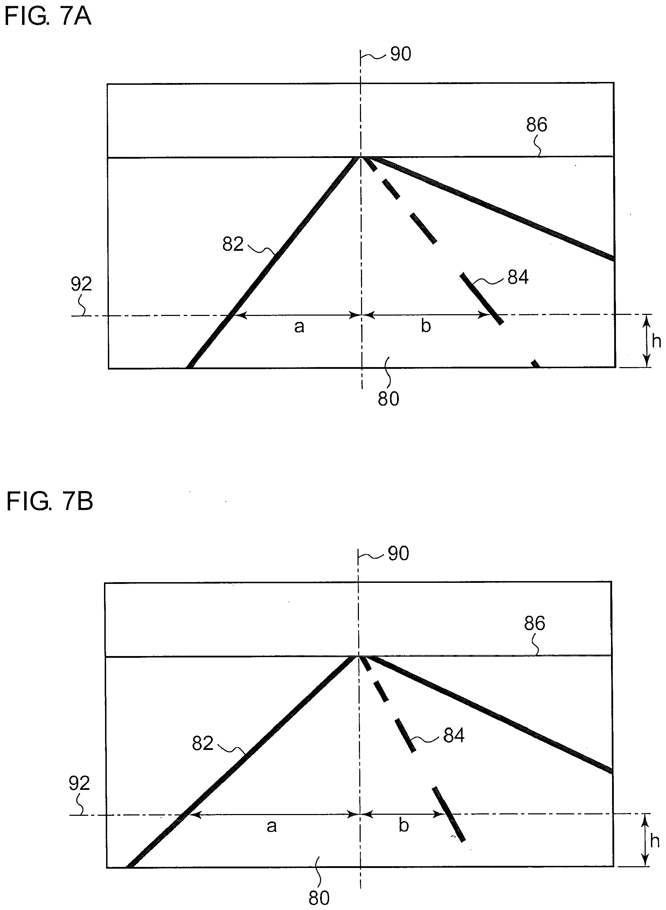

Figs. 7A and 7B schematically show a method of identifying the vehicle position by referring to an image in front of the vehicle. Fig. 7A shows an image captured when the vehicle 50 is traveling near the center of the driving lane 80 and corresponding to a situation of traveling shown in Fig. 1. The image in front of the vehicle captured by the on-vehicle camera 42 includes the driving lane 80, the left lane line 82, the right lane line 84, the horizontal line 86, etc. Fig. 7B shows an image captured when the vehicle 50 is traveling on the right side of the driving lane 80 and corresponding to a situation of traveling shown in Fig. 2.

The identification unit 34 defines a central reference line 90 and a horizontal reference line 92 in the captured image. The central reference line 90 is a reference line defined to extend in the direction of travel (z direction) or the direction of height (y direction) of the vehicle 50. The central reference line 90 indicates the central position of the vehicle 50 or the transversal (x direction) position of the driver's seat. The horizontal reference line 92 is a reference line defined to extend in the transversal direction (x direction) and indicates the position where the virtual image 70 is presented. The height h of the horizontal reference line 92 is defined to be 1.7 m∼2.0 m ahead where the virtual image 70 is presented.

The positions of the central reference line 90 and the horizontal reference line 92 are stored in the control unit 30. For example, if the virtual image presentation system 100 is installed exclusively for the vehicle 50, the positions are set to appropriate values in accordance with the positions of installation of the combiner 28 and the on-vehicle camera 42. If the virtual image presentation system 100 is a general-purpose product installed in the vehicle 50 after shipping, the positions of the central reference line 90 and the horizontal reference line 92 may be defined by a user action. The position of the central reference line 90 may be determined by referring to an image from the on-vehicle camera 42. For example, the position of the central reference line 90 may be determined by the positions of the intersection between the left lane line 82 and the right lane line (or extensions from these lines).

The identification unit 34 uses the central reference line 90 and the horizontal reference line 92 thus defined to measure the length a from the central reference line 90 to the left lane line 82 along the horizontal reference line 92 and the length b from the central reference line 90 to the right lane line 84 along the horizontal reference line 92. The identification unit 34 uses the lengths a and b determined by the measurement to obtain a score c=(a-b)/(a+b) of horizontal shift of the position of the traveling vehicle 50. If the vehicle 50 travels at the center as shown in Fig. 7A and the lengths a and b are equal to each other, for example, the score is such that c=0. Meanwhile, if the vehicle 50 travels immediately above the left lane line 82, c=-1. If the vehicle 50 travels immediately above the right lane line 84, c=1. If the ratio a:b is such that a:b=2:1 as shown in Fig. 7B, c=1/3. The identification unit 34 calculates the score c indicating the magnitude of horizontal shift of the position of the traveling vehicle 50 and identifies the position of the traveling vehicle 50 relative to the driving lane 80 accordingly. The identification unit 34 communicates information related to the identified position of the traveling vehicle 50 to the virtual image position adjustment unit 36.

Further, the identification unit 34 identifies the direction of travel of the vehicle 50, i.e., whether the vehicle 50 is traveling straight or turning left or right, based on the information from the on-vehicle sensor 44. Further, the identification unit 34 identifies the vibrational state of the vehicle 50 based on the information from the on-vehicle sensor 44. The identification unit 34 identifies the direction of travel and vibrational state of the vehicle 50 based on information from the steering angle sensor, acceleration sensor, angular acceleration sensor, etc. The identification unit 34 communicates information related to the direction of travel and vibrational state of the vehicle 50 thus identified to the virtual image position adjustment unit 36.

The virtual image position adjustment unit 36 controls the operation of the projection unit 12 and the projection mirror driver 24 based on the information from the identification unit 34 and adjusts the position to present the virtual image 70 accordingly. The virtual image position adjustment unit 36 includes an image position adjustment unit 37 and a projection position adjustment unit 38. The projection position adjustment unit 38 adjusts the position to project the image display light by controlling the projection mirror driver 24 as shown in Fig. 5. Meanwhile, the image position adjustment unit 37 adjusts the position of the image included in the image display light generated by the projection unit 12 by controlling the operation of the image display element 16.

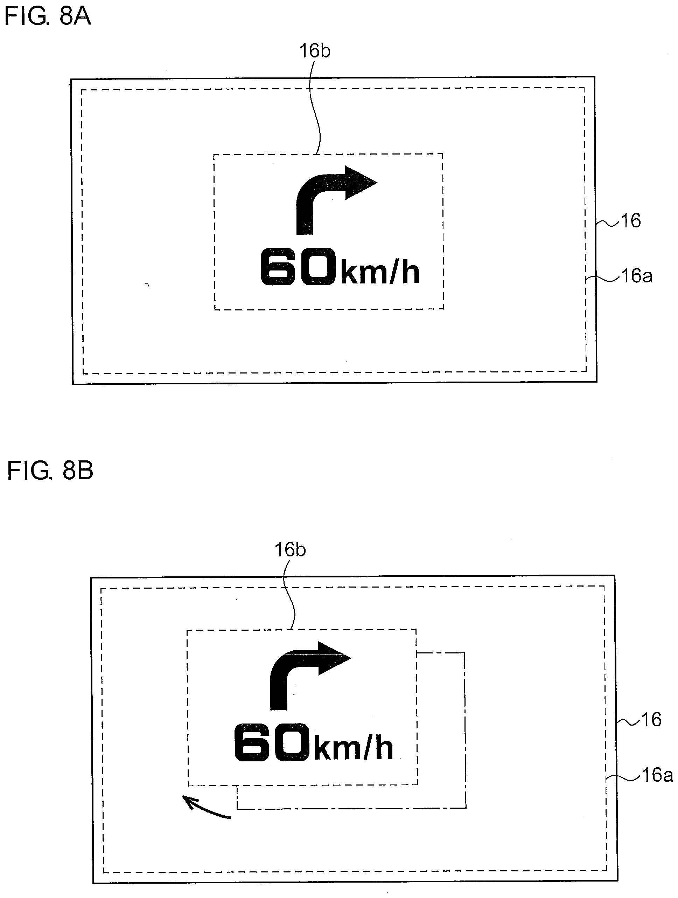

Figs. 8A and 8B schematically show an exemplary operation of the image display element 16. The figures schematically show how the image position adjustment unit 37 controls the image display element 16 by way of example. Fig. 8A shows that an image display region 16b is assigned to the center of an effective display region 16a of the image display element 16. In this case, the position to present the virtual image 70 is near the center of the image display light projected. Meanwhile, Fig. 8B shows that the image display region 16b is assigned to a position toward top left in the effective display region 16a. In this case, the position to present the virtual image 70 is toward top left of the image display light projected. The image position adjustment unit 37 adjusts the position to present the virtual image 70 by adjusting the position of the image display region 16b in this way.

The virtual image position adjustment unit 36 determines the amount of adjustment and direction of adjustment of the virtual image 70 based on the information from the identification unit 34. If the position of the traveling vehicle 50 is identified as being shifted rightward, i.e., if the score c calculated by the identification unit 34 is such that c>0, the position of presentation is adjusted such that the position to present the virtual image 70 is shifted leftward. Conversely, if the position of the traveling vehicle 50 is identified as being shifted leftward, i.e., if the score c calculated by the identification unit 34 is such that c<0, the position to present the virtual image 70 is shifted rightward.

The virtual image position adjustment unit 36 defines the amount of shift of the position to present the virtual image 70 in accordance with the amount of shift calculated by the identification unit 34, i.e., the magnitude of absolute value of the score c. For example, the virtual image position adjustment unit 36 determines the amount of adjustment of the position to present the virtual image 70 by multiplying the magnitude of the score c by a predetermined constant of proportion. The virtual image position adjustment unit 36 may determine the amount of adjustment of the position to present the virtual image 70 by referring to a table that maps ranges of magnitude of the score c to the respective amounts of adjustment of the position to present the virtual image 70. In the latter case, the values in the table may be defined such that the amount of adjustment of the position to present the virtual image 70 is constant in a certain range of magnitude of the score c defined in the table. For example, the values in the table may be defined such that the position to present the virtual image 70 is the center if the value of the score c is such that -0.05≤c≤0.05.

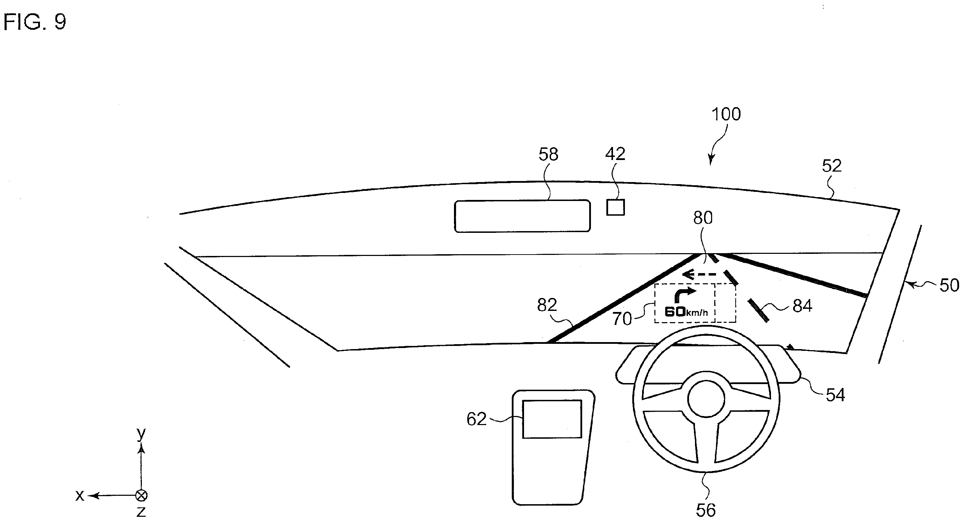

Fig. 9 schematically shows how the virtual image 70 looks with the position of presentation being adjusted by the virtual image presentation system 100. Fig. 9 shows that the vehicle 50 is traveling on the right side of the driving lane 80 and corresponds to a case in which the image in front of the vehicle shown in Fig. 7B is captured. In this case, the score calculated by the identification unit 34 is such that c=1/3 so that the virtual image position adjustment unit 36 adjusts the position of presentation such that the virtual image 70 is shifted leftward when presented. Consequently, the virtual image 70 is presented at a position shifted leftward from the central position of the steering wheel 56. For example, the virtual image 70 is presented near the center of the driving lane 80. By adjusting the position to present the virtual image 70 in this way, the predetermined relative positions of the virtual image 70 with respect to the left lane line 82 and the right lane line 84 as viewed from the driver is maintained.

The virtual image position adjustment unit 36 may adjust the position to present the virtual image 70 in accordance with the direction of travel of the vehicle 50 identified by the identification unit 34. For example, if the vehicle 50 is identified as traveling along a road that curves rightward, the virtual image position adjustment unit 36 may adjust the position of presentation such that the virtual image 70 is shifted rightward when presented. In this way, the virtual image 70 can be presented in a direction of line of sight of the driver directed to a space ahead of the right-hand curve. Conversely, if the vehicle 50 is identified as traveling along a road that curves leftward, the position of presentation may be adjusted such that the virtual image 70 is shifted leftward when presented. If the vehicle 50 is identified as traveling on an upward slope, the virtual image position adjustment unit 36 may adjust the position of presentation such that the virtual image 70 is shifted downward when presented. Conversely, if the vehicle 50 is identified as traveling on a downward slope, the position of presentation may be adjusted such that the virtual image 70 is shifted upward when presented.

The virtual image position adjustment unit 36 may adjust the position to present the virtual image 70 in accordance with the vibrational state of the vehicle 50 identified by the identification unit 34. More specifically, the position of presentation may be adjusted such that the virtual image 70 is shifted in a direction opposite to the direction of vibration of the vehicle 50 when presented. This helps mitigate the blurring of the virtual image 70 due to the vibration of the vehicle 50.

The virtual image position adjustment unit 36 may adjust the position to present the virtual image 70 by selectively using the image position adjustment unit 37 or the projection position adjustment unit 38 depending on the type of information identified by the identification unit 34. For example, if the position of presentation is adjusted in accordance with the position of the traveling vehicle 50 identified by the identification unit 34, the projection position adjustment unit 38 may adjust the position to present the virtual image 70. Further, if the position of presentation is adjusted in accordance with the vibrational state of the vehicle 50 identified by the identification unit 34, the image position adjustment unit 37 may adjust the position to present the virtual image 70. Only one of the image position adjustment unit 37 and the projection position adjustment unit 38 may be used to adjust the position of presentation. Alternatively, both adjustment functions may be combined to adjust the position of presentation.

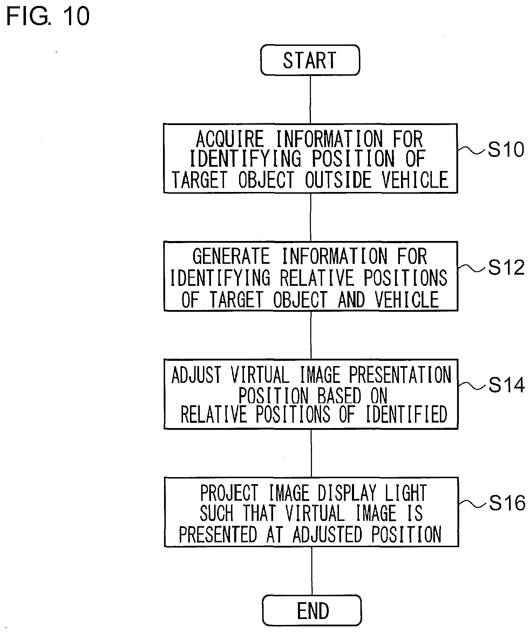

A description will be given of the operation of the virtual image presentation system 100 with the above structure. Fig. 10 is a flowchart showing the flow of operation of the virtual image presentation system 100. Information for identifying the position of an object outside the vehicle is acquired (S10) and information for identifying the relative positions of the object and the vehicle is generated (S12). The virtual image presentation position is adjusted based on the information for identifying the relative positions thus generated (S14) and an image display light is projected such that a virtual image is presented at the adjusted position of presentation.

According to the virtual image presentation system 100 of the embodiment, the relative positions of the object outside the vehicle and the vehicle 50 are identified and the position to present the virtual image 70 is adjusted based on the relative positions. In particular, the position to present the virtual image 70 can be adjusted in alignment with the movement of the scenery outside the vehicle viewed at a position about 2 mm in front of the vehicle where the virtual image 70 is presented. As a result, unnatural impression in which the virtual image 70 appears as if it is moving relative to the scenery outside the vehicle is reduced. This can enhance the visibility of the virtual image 70 presented.

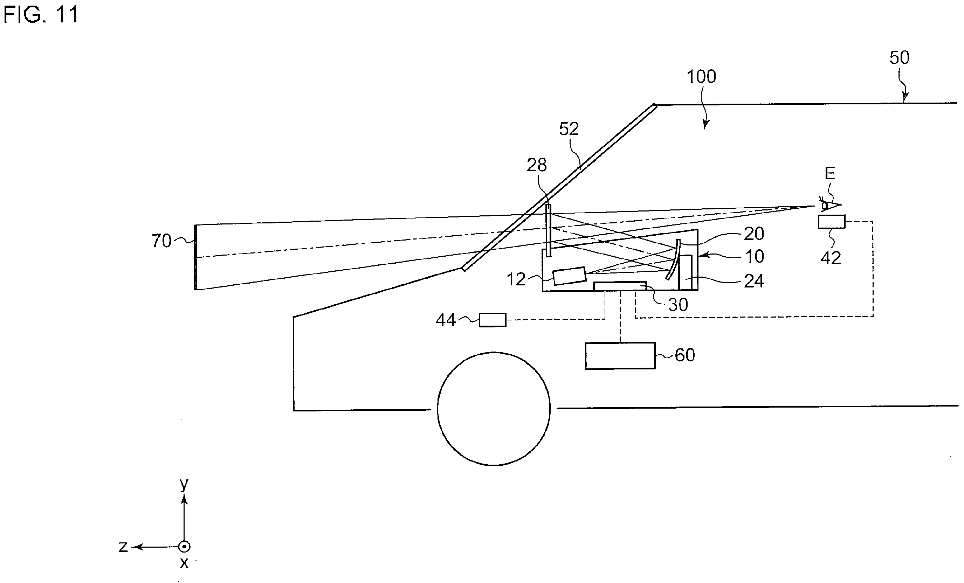

A description will now be given of an embodiment according to the invention. Fig. 11 schematically shows the structure of the virtual image presentation system 100. In this embodiment, the on-vehicle camera 42 is provided substantially at the same position as the viewing point of the driver E. The embodiment differs from the illustrative example described above in that the on-vehicle camera 42 is capable of capturing the scenery outside the vehicle and the virtual image 70 at the same time. The following description of the embodiment highlights the difference from the illustrative example described above.

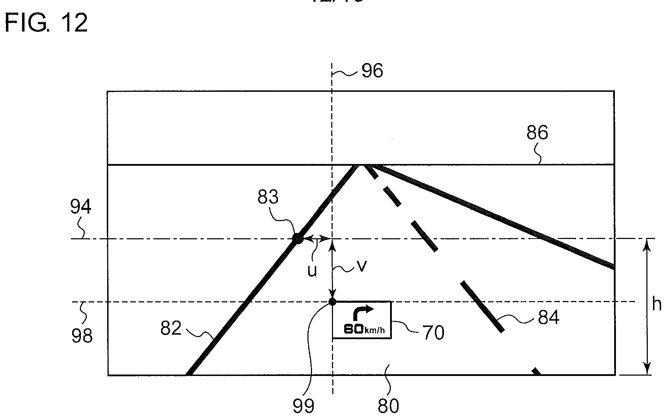

Fig. 12 schematically shows an image captured by the on-vehicle camera 42 according to the embodiment. As shown in the figure, the image captured by the on-vehicle camera 42 according to the embodiment includes the virtual image 70 as well as the scenery outside the vehicle including the driving lane 80, the left lane line 82, the right lane line 84, and the horizontal line 86. The image captured by the on-vehicle camera 42 is transmitted to the control unit 30.

The identification unit 34 defines a horizontal reference line 94 in the captured image. Unlike the illustrative example described above, the height h of the horizontal reference line 94 is defined to be farther from the height position where the virtual image 70 is presented. For example, the height h of the horizontal reference line 94 is defined at a position about 10 m∼20 m in front of the vehicle. Further, the identification unit 34 defines the intersection between the horizontal reference line 94 and the left lane line 82 as a reference point 83 by means of image recognition.

Still further, the identification unit 34 defines a virtual image horizontal position detection line 96 and a virtual image height position detection line 98. The virtual image horizontal position detection line 96 is a detection line indicating the horizontal position of the virtual image 70 and the virtual image height position detection line 98 is a detection line indicating the height position of the virtual image 70. By means of image recognition, the identification unit 34 defines the top left position of the virtual image 70 as a detection point 99, defines a detection line that passes through the detection point 99 and extends horizontally as the virtual image horizontal position detection line 96, and defines a detection line that passes through the detection point 99 and extends vertically as the virtual image height position detection line 98.

The identification unit 34 measures a distance u from the reference point 83 to the virtual image horizontal position detection line 96 and a distance v from the reference point 83 to the virtual image height position detection line 98. The identification unit 34 identifies the relative positions of the reference point 83 and the detection point 99. The identification unit 34 transmits information indicating the relative positions of the reference point 83 and the detection point 99 thus identified to the virtual image position adjustment unit 36. The identification unit 34 maintains reference distances u0 and v0 that define the reference position to present the virtual image 70. The identification unit 34 transmits differences between the measured distances and the reference distances, i.e., values of u-u0 and v-v0, to the virtual image position adjustment unit 36.

The virtual image position adjustment unit 36 exercises feedback control for adjusting the position to present the virtual image 70 so that the reference point 83 and the detection point 99 are relatively positioned as predefined. The virtual image position adjustment unit 36 determines the direction and amount of adjustment of the position of presentation, based on the differences between the measured distances and the reference distances, u-u0 and v-v0, transmitted from the identification unit 34. With this, the distances between the detection point 99 of the virtual image 70 and the reference point 83 are adjusted to be maintained at the reference distances u0 and v0.

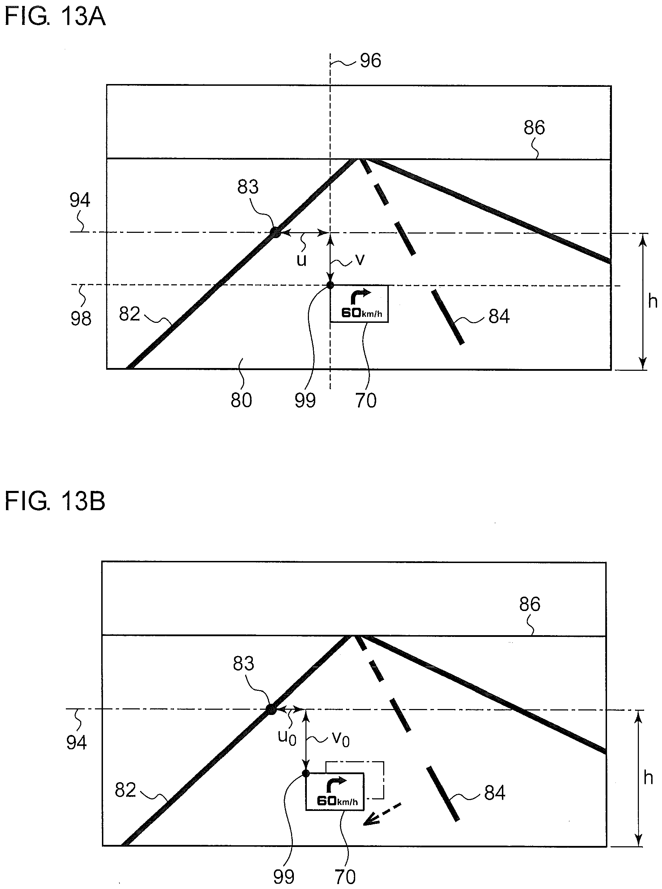

Figs. 13A and 13B schematically show how the position to present the virtual image 70 is adjusted. Fig. 13A shows the position of the virtual image 70 before the adjustment and Fig. 13B shows the position of the virtual image 70 after the adjustment. As shown in Fig. 13A, the distances u and v indicating the relative positions of the reference point 83 and the detection point 99 are measured by using the image from the on-vehicle camera 42. By adjusting the position to present the virtual image 70 based on the measured distances u and v, the position to present the virtual image 70 is adjusted such that the distances from the reference point 83 to the detection point 99 are equal to the reference distances u0 and v0. In this way, the virtual image 70 is presented such that the predetermined relative positions of the left lane line 82 (object) and the virtual image 70 are maintained.

In this embodiment, the position of the virtual image 70 is adjusted with reference to the horizontal reference line 94 defined at a position about 10 m∼20 m in front of the vehicle. Unlike the position of the central reference line 90 according to the illustrative example described above, the position of the reference point 83 at the intersection between the left lane line 82 and the horizontal reference line 94 can vary depending on the position of the traveling vehicle 50. However, the horizontal reference line 94 is defined at a position further ahead of the vehicle than the virtual image 70. Therefore, leftward and rightward positional shifts of the reference point 83 are smaller than leftward and rightward positional shifts of the virtual image 70. Therefore, leftward and rightward positional shifts of the virtual image 70 can be significantly detected equally with reference to the reference point 83 and the position to present the virtual image 70 can be adjusted accordingly.

The position about 10 m∼20 m in front of the vehicle, where the horizontal reference line 94 is defined, is an area where there are usually no vehicles traveling ahead provided, for example, that the vehicle 50 is traveling at a constant speed. It can therefore be said that there is only a small likelihood that the left lane line 82 is blocked by the vehicle ahead while the vehicle 50 is traveling and the reference point 83 cannot be detected. Defining the horizontal reference line 94 at the above-discussed position in this embodiment ensures that the reference point 83 can be properly detected. In this way, the position to present the virtual image 70 can be suitably adjusted.

Described above is an explanation based on an exemplary embodiment. The embodiment is intended to be illustrative only and it will be obvious to those skilled in the art that various modifications to constituting elements and processes could be developed and that such modifications are also within the scope of the present invention.

In the embodiment described above, the virtual image position adjustment unit 36 includes both the image position adjustment unit 37 and the projection position adjustment unit 38. In another variation, the virtual image position adjustment unit 36 may include only one of the image position adjustment unit 37 and the projection position adjustment unit 38. In this case, the virtual image presentation position may be adjusted only by one of the image display element 16 and the projection mirror driver 24.

In the embodiment described above, the orientation of the projection mirror 20 can be adjusted in the leftward and rightward direction by the projection mirror driver 24. In still another variation, the orientation of the projection mirror 20 may be adjustable in the upward and downward direction or may be adjustable both in the leftward and rightward direction and in the upward and downward direction. The position to present the virtual image 70 may be adjusted in the upward and downward direction by using the projection mirror 20 adjustable in the upward and downward direction.

In the embodiment described above, the position to present the virtual image 70 is adjusted by using the image display element 16 and the projection mirror driver 24. In still another variation, the position to present the virtual image 70 may be adjusted by using an element other than these components. For example, the position to present the virtual image 70 may be adjusted by using the projection lens 18 included in the projection unit 12. For example, the position to present the virtual image 70 may be adjusted by changing the direction of projection of the image display light by displacing the position of the projection lens 18 with respect to the light axis of the image display light.

In the embodiment described above, the identification unit 34 generates the information used to adjust the position to present the virtual image 70 based on the information from both the on-vehicle camera 42 and the on-vehicle sensor 44. In still another variation, the information used to generate the position to present the virtual image 70 may be generated based on the information from only one of the on-vehicle camera 42 and the on-vehicle sensor 44. For example, when only the information from the on-vehicle camera 42 is used, the position to present the virtual image 70 may be adjusted only for the purpose of mitigating the positional shift relative to the object outside the vehicle. Meanwhile, when only the information from the on-vehicle sensor 44 is used, the position to present the virtual image 70 may be adjusted for the purpose of mitigating the blurring of the virtual image 70 due to the vibration of the vehicle 50. In still another variation, the vibration of the vehicle 50 may be detected by using the information from the on-vehicle camera 42, or the position of the traveling vehicle 50 may be detected by using the information from the on-vehicle sensor 44.

In the embodiment described above, a lane line for marking a traffic lane on a road is used as an object. In still another variation not according to this invention, a different object around the vehicle visible to the driver may be used as a target object. For example, the position of a vehicle traveling in front of the driver's vehicle may be defined as an object so that the position of traveling of the driver's vehicle may be identified by using the position of the vehicle in front.

In the embodiment described above, the combiner 28 is used as a virtual image presentation plane. In still another variation, the windshield 52 of the vehicle 50 may be used as a virtual image presentation plane. Further, the virtual image presentation plane may not be defined directly in front of the driver and may be defined in alignment with the central position of the vehicle slightly shifted from the immediate front of the driver.

In the embodiment described above, the position to present the virtual image 70 is about 1.7 m∼2.0 m ahead of the vehicle. In still another variation, the position to present the virtual image may be farther ahead of the vehicle. For example, the image projection device 10 may be configured such that the position to present the virtual image is about 5 m∼10 m ahead of the vehicle. In this case, it is desired that the position of the horizontal reference line 92 used for detection of the position of traveling be defined at a position about 5 m∼10 m ahead of the vehicle, which is where the virtual image is presented.

### [DESCRIPTION OF THE REFERENCE NUMERALS]

E .. driver, 10 ... image projection device, 12 ... projection module, 20 ... projection mirror, 24 ... projection mirror driver, 28 ... combiner, 30 ... control unit, 34 ... identification unit, 36 ... virtual image position adjustment unit, 40 ... acquisition unit, 42 on-vehicle camera, 44 ... on-vehicle sensor, 50 ... vehicle, 52 ... windshield, 60 ... external device, 70 ... virtual image, 80 driving lane, 82 ... left lane line, 84 ... right lane line, 100 ... virtual image presentation system

### [INDUSTRIAL APPLICABILITY]

According to the invention, the visibility of a virtual image superimposed and displayed on the scenery outside vehicle is improved.

## Claims

1. A virtual image presentation system (100) comprising:
a projection unit (12) adapted to project an image display light toward a virtual image presentation plane in a vehicle, wherein the virtual image presentation plane is a windshield (52) of the vehicle or a combiner (28), to presents a virtual image (70) to a driver (E);
an acquisition unit (40) adapted to acquire information for identifying a position of an object outside the vehicle;
an identification unit (34) adapted to generate information for identifying relative positions of the object and the vehicle, based on the information acquired by the acquisition unit; and
a virtual image position adjustment unit (36) adapted to adjust a position to present the virtual image as viewed from the driver, based on the information generated by the identification unit, wherein
the acquisition unit (40) includes an imaging device (42) that is provided at a position in which it is possible to capture an image including both the virtual image presented on the virtual image presentation plane and a lane line (82, 84) that extends along a traffic lane (80) that the vehicle travels, and that is adapted to capture an image of a scene in front of the vehicle, including both the virtual image presented on the virtual image presentation plane and the lane line (82, 84), wherein
the identification unit (34) is adapted to generate the information for identifying relative positions of the virtual image and the lane line from the image captured by the imaging device, and wherein
the virtual image position adjustment unit (36) is adapted to adjust the position to present the virtual image, based on the information generated by the identification unit and identifying the relative positions of the virtual image and the lane line.

2. The virtual image presentation system according to claim 1, wherein
the virtual image position adjustment unit is adapted to adjust the position to present the virtual image such that the relative positions of the object and the vehicle as viewed from the driver are maintained as predefined.

3. The virtual image presentation system according to claim 1 or 2, wherein
the identification unit is adapted to generate information for identifying relative positions of the vehicle and two lane lines extending on the left and right of the traffic lane that the vehicle travels.

4. A virtual image presentation method using the virtual image presentation system according to any one of claims 1-3 comprising:
generating information for identifying relative positions of a virtual image (70) and a lane line (82, 84), based on the image that is captured by the image device and includes both the virtual image presented on the virtual image presentation plane and the lane line;
adjusting a position to present a virtual image as viewed from the driver, based on the generated information for identifying the relative positions of the virtual image and the lane line; and
projecting an image display light toward the virtual image presentation plane so that the virtual image is presented at the adjusted position to present the virtual image.

## Patentansprüche

1. Darstellungssystem für ein virtuelles Bild (100), das folgendes aufweist:
eine Projektionseinheit (12), die geeignet ist, ein Bildanzeigelicht in Richtung einer Darstellungsebene für ein virtuelles Bild in einem Fahrzeug zu projizieren, wobei die Darstellungsebene für das virtuelle Bild eine Windschutzscheibe (52) des Fahrzeugs oder ein Kombinator (28) ist, um ein virtuelles Bild (70) zu einem Fahrer (E) zu präsentieren bzw. darzustellen;
eine Erfassungseinheit (40), die geeignet ist, Information zum Identifizieren einer Position eines Objekts außerhalb des Fahrzeugs zu identifizieren;
eine Identifikationseinheit (34), die geeignet ist, Information zum Identifizieren relativer Positionen des Objekts und des Fahrzeugs zu erzeugen, basierend auf der von der Erfassungseinheit erfassten Information; und
eine Positionseinstelleinheit (36) für ein virtuelles Bild, die geeignet ist, eine Position einzustellen, um das virtuelle Bild aus der Sicht des Fahrers basierend auf der von der Identifikationseinheit erzeugten Information zu präsentieren, wobei
die Erfassungseinheit (40) eine Bildaufnahmevorrichtung (42) aufweist, die an einer Position vorgesehen ist, in welcher es möglich ist, ein Bild zu erfassen, das sowohl das virtuelle Bild, das an der Darstellungsebene für das virtuelle Bild präsentiert wird, als auch eine Fahrspurlinie (82, 84), die sich entlang einer Fahrspur (80), die das Fahrzeug fährt, erstreckt, aufweist, und die geeignet ist, ein Bild einer Szene vor dem Fahrzeug aufzunehmen, die sowohl das virtuelle Bild, das auf der Darstellungsebene für das virtuekke -bukd präsentiert wird, als auch die Fahrspurlinie (82, 84) aufweist, wobei
die Identifikationseinheit (34) geeignet ist, die Information zum Identifizieren der relativen Positionen des virtuellen Bildes und der Fahrspurlinie aus dem von der Bildaufnahmevorrichtung erfassten Bild zu erzeugen, und wobei
die Positionseinstelleinheit (36) für das virtuelle Bild geeignet ist, die Position anzupassen, um das virtuelle Bild zu präsentieren, basierend auf den von der Identifikationseinheit erzeugten Information und dem Identifizieren der relativen Positionen des virtuellen Bildes und der Spurlinie.

2. Darstellungssystem für ein virtuelles Bild nach Anspruch 1, wobei die Positionseinstelleinheit für das virtuelle Bild geeignet ist, die Position zur Darstellung des virtuellen Bildes so einzustellen, dass die relativen Positionen des Objekts und des Fahrzeugs aus Sicht des Fahrers wie vordefiniert beibehalten werden.

3. Darstellungssystem für ein virtuelles Bild nach Anspruch 1 oder 2, wobei die Identifikationseinheit geeignet ist, Information zum Identifizieren relativer Positionen des Fahrzeugs und zwei Fahrspurlinien, die sich links und rechts von der Fahrspur, die das Fahrzeug fährt, erstrecken, zu erzeugen.

4. Verfahren zur virtuellen Bilddarstellung unter Verwendung des Darstellungssystems für ein virtuelles Bild nach einem der Ansprüche 1-3, das folgendes aufweist:
Erzeugen von Information zum Identifizieren von relativen Positionen eines virtuellen Bildes (70) und einer Fahrspurlinie (82, 84) basierend auf dem Bild, das von der Bildvorrichtung erfasst wird und sowohl das auf der virtuellen Bilddarstellungsebene dargestellte virtuelle Bild als auch die Fahrspurlinie aufweist;
Einstellen einer Position zum Präsentieren bzw. Darstellen eines virtuellen Bildes aus der Sicht des Fahrers, basierend auf der erzeugten Information zum Identifizieren der relativen Positionen des virtuellen Bildes und der Fahrspurlinie; und
Projizieren eines Bildanzeigelichts in Richtung einer Darstellungsebene für das virtuelle Bild, so dass das virtuelle Bild an der eingestellten Position zum Präsentieren des virtuellen Bildes präsentiert wird.

## Revendications

1. Système de présentation d'image virtuelle (100) comprenant :
un module de projection (12) adapté à projeter une lumière d'affichage d'image en direction d'un plan de présentation d'image virtuelle dans un véhicule, le plan de présentation d'image virtuelle étant un pare-brise (52) du véhicule ou un combinateur (28), pour présenter une image virtuelle (70) à un conducteur (E) ;
un module d'acquisition (40) adapté à acquérir des informations pour identifier une position d'un objet à l'extérieur du véhicule ;
un module d'identification (34) adapté à générer des informations pour des positions relatives d'identification de l'objet et du véhicule, sur la base des informations acquises par le module d'acquisition ; et
un module d'ajustement de position d'image virtuelle (36) adapté à ajuster une position pour présenter l'image virtuelle telle que vue par le conducteur, sur la base des informations générées par le module d'identification, dans lequel
le module d'acquisition (40) inclut un dispositif de capture d'image (42) qui est prévu à une position dans laquelle il est possible de capturer une image comprenant à la fois l'image virtuelle présentée sur le plan de présentation d'image virtuelle et une ligne de voie (82, 84) qui s'étend le long d'une voie de circulation (80) que le véhicule parcourt, et qui est adapté à capturer une image d'une scène en face du véhicule, comprenant à la fois l'image virtuelle présentée sur le plan de présentation d'image virtuelle et la ligne de voie (82, 84), dans lequel le module d'identification (34) est adapté à générer les informations pour identifier des positions relatives de l'image virtuelle et de la ligne de voie à partir de l'image capturée par le dispositif de capture d'image, et dans lequel
le module d'ajustement de position d'image virtuelle (36) est adapté à ajuster la position pour présenter l'image virtuelle, sur la base des informations générées par le module d'identification et identifiant les positions relatives de l'image virtuelle et de la ligne de voie.

2. Système de présentation d'image virtuelle selon la revendication 1, dans lequel le module d'ajustement de position d'image virtuelle est adapté à ajuster la position pour présenter l'image virtuelle de telle sorte que les positions relatives de l'objet et du véhicule telles que vues par le conducteur sont maintenues de la manière prédéfinie.

3. Système de présentation d'image virtuelle selon la revendication 1 ou 2, dans lequel
le module d'identification est adapté à générer des informations pour identifier des positions relatives du véhicule et de deux lignes de voies s'étendant sur la gauche et la droite de la voie de circulation que le véhicule parcourt.

4. Procédé de présentation d'image virtuelle utilisant le système de présentation d'image virtuelle selon l'une quelconque des revendications 1 à 3, comprenant :
générer des informations pour identifier des positions relatives d'une image virtuelle (70) et d'une ligne de voie (82, 84), sur la base de l'image qui est capturée par le dispositif de capture d'image et comprend à la fois l'image virtuelle présentée sur le plan de présentation d'image virtuelle et la ligne de voie ;
ajuster une position pour présenter une image virtuelle telle que vue par le conducteur, sur la base des informations générées pour identifier les positions relatives de l'image virtuelle et de la ligne de voie ; et
projeter une lumière d'affichage d'image en direction du plan de présentation d'image virtuelle de telle sorte que l'image virtuelle est présentée au niveau de la position ajustée pour présenter l'image virtuelle.
